# EUROPÄISCHE PATENTANMELDUNG

(11) **EP 4 257 266 A1**
(43) Veröffentlichungstag der Anmeldung: **11.10.2023**
(21) Anmeldenummer: 22020149.5
(22) Anmeldetag: 04.04.2022
(51) Int. Cl.: B22F 1/103, B22F 1/16, B22F 10/10, B33Y 10/00, B33Y 40/20, B33Y 70/00, B22F 3/10, C22C 1/04

(54) **VERFAHREN ZUR ADDITIVEN FERTIGUNG WENIGSTENS EINES METALLISCHEN UND/ODER KERAMISCHEN BAUTEILS, SOWIE MATERIALZUSAMMENSETZUNG HIERFÜR**

(71) Anmelder: Incus GmbH, 1220 Wien (AT)
(72) Erfinder: Mitteramskogler, Gerald, 1020 Wien (AT); Harakály, György Attila, 1230 Wien (AT); Veigl, Christian, 1110 Wien (AT)
(74) Vertreter: Keschmann, Marc

(57) **Zusammenfassung**

Bei einem Verfahren zur additiven Fertigung wenigstens eines metallischen und/oder keramischen Bauteils, umfassend a) das additive Aufbauen wenigstens eines Grünteils in einer additiven Druckvorrichtung aus einer Materialzusammensetzung, die Partikel aus Metall und/oder Keramik und einen organischen Binder umfasst, b) das Entbindern des wenigstens einen Grünteils, und c) das Sintern des wenigstens einen Grünteils, um das Bauteil zu erhalten, sind die Partikel mit wenigstens einer sie umhüllenden Barriereschicht versehen.

## Beschreibung

Die Erfindung betrifft ein Verfahren zur additiven Fertigung wenigstens eines metallischen und/oder keramischen Bauteils, umfassend:
a) additives Aufbauen wenigstens eines Grünteils in einer additiven Druckvorrichtung aus einer Materialzusammensetzung, die Partikel aus Metall und/oder Keramik und einen organischen Binder umfasst,
b) Entbindern des wenigstens einen Grünteils, und
c) Sintern des wenigstens einen Grünteils, um das Bauteil zu erhalten.

Die Erfindung betrifft weiters eine Materialzusammensetzung zur additiven, sinterbasierten Fertigung von metallischen und/oder keramischen Bauteilen, umfassend einen organischen Binder und Keramik- und/oder Metallpartikel.

Es sind zahlreiche Verfahren zur additiven Fertigung von Bauteilen aus keramischen, metallischen oder Mischwerkstoffen bekannt, denen gemeinsam ist, dass ein Grünteil aus Partikeln aufgebaut wird, die von einem Binder zusammengehalten werden, worauf das Grünteil entbindert und gesintert wird. Bei einer ersten Gruppe von Verfahren geht man von einer Materialzusammensetzung aus, bei der die Partikel von Anfang an in der Bindermasse verteilt sind und daher dauernd im direkten Kontakt mit der Bindermasse stehen, wobei die Materialzusammensetzung zum Aufbau des Grünteils ortsselektiv aufgebracht oder verfestigt wird. Zu dieser Gruppe von Verfahren gehören die Stereolithographie, das Nanopartikel Jetting, Fused Deposition Modeling (FDM) oder Fused Filament Fabrication (FFF), Metal Pellet FDM, Mold Slurry Deposition und Metal Selective Laser Sintering. Bei einer zweiten Gruppe von Verfahren wird der Binder erst während des Druckprozesses mit den Partikeln in Kontakt gebracht. Zu dieser Gruppe von Verfahren gehören Binder Jetting und Powder Metallurgy Jetting.

In beiden Fällen kann es auf Grund des direkten Kontakts der Partikel mit dem Binder zu negativen Auswirkungen auf den Prozess oder die Bauteileigenschaften kommen. Beispielsweise besteht bei manchen Metallen das Problem, dass freigesetzte Metallionen zu einer Verfärbung oder zu einer Veränderung der Reaktivität der Materialzusammensetzung führen. Weiters wurde beobachtet, dass der direkte Kontakt zwischen dem Binder und den Metallpartikeln zu unerwünschten PolymerisationsReaktionen, wie zum Beispiel dem Gelieren der Materialzusammensetzung führt, vermutlich durch eine kationische Polymerisation. Dies spiegelt sich in veränderten Druckeigenschaften und in den Eigenschaften des finalen Bauteiles wider.

Weiters wurde beobachtet, dass besonders Metallpartikel während des Entbinderns zwischen 100-600°C Sauerstoff, Kohlenstoff, Stickstoff oder andere Elemente aufnehmen, was die Materialeigenschaften nach dem Sintern verändert und vielfach zu einer unerwünschten Veränderung physikalischer Eigenschaften führt. Beispielsweise verändert die Aufnahme von Kohlenstoff oder Sauerstoff bei Titanlegierungen die mechanischen Eigenschaften und führt zu einer Versprödung des Metalls. Weiters kann sich die elektrische Leitfähigkeit von Kupferlegierungen verschlechtern oder es können sich die optischen Eigenschaften von Keramiken verändern.

Die Erfindung zielt daher darauf ab, die oben angeführten Nachteile zu überwinden und ein sinterbasiertes 3D-Druckverfahren im Hinblick auf die besonderen Anforderungen von pulverhaltigen Feedstocks, insbesondere mit Metall- und/oder Keramikpartikeln gefüllten Feedstocks zu optimieren.

Zur Lösung dieser Aufgabe sieht die Erfindung bei einem Verfahren der eingangs genannten Art im Wesentlichen vor, dass die Partikel mit wenigstens einer sie umhüllenden Barriereschicht versehen sind. Die Erfindung beruht somit auf der Idee, die Partikel einzeln einzukapseln, um ihre Wechselwirkung mit der Umgebung, insbesondere mit dem Binder, zu verringern. Die Barriereschicht ist hierbei insbesondere derart vorgesehen, dass sie das jeweilige Partikel vollständig umgibt und einhüllt und einen Kontakt zwischen den Partikeln und ihrer Umgebung, insbesondere dem Binder, verhindert.

Die Partikel können mit einer einzigen Barriereschicht oder mit mehreren Barriereschichten ungleicher Natur (organisch und/oder anorganisch) umhüllt sein.

Unter einer Barriereschicht wird im Rahmen der Erfindung eine Schicht verstanden, welche
- den Durchtritt von Sauerstoff, Kohlenstoff, Metallionen und/oder Wasser von den Partikeln an die Umgebung und umgekehrt zumindest erschwert, insbesondere im Wesentlichen unterbindet, und/oder
- eine chemische Reaktion zwischen den Partikeln und ihrer Umgebung, insbesondere dem Binder, zumindest erschwert, insbesondere im Wesentlichen unterbindet, und/oder
- die chemische Beständigkeit der Materialzusammensetzung während der Lagerung, des Druckprozesses und der weiteren Handhabung, dem Postprozessieren, verbessert.

Die Barriereeigeschaften der Barriereschicht gegenüber Sauerstoff bewirkt einen Schutz vor Oxidation der Partikel während der Lagerung, des Druckprozesses und des Entbinderns (bei Temperaturen von bis zu 600°C).

Die Barriereeigeschaften der Barriereschicht gegenüber Kohlenstoff bewirkt während des Entbinderns eine Verringerung der Aufnahme von aus dem Binder stammendem Kohlenstoff in die Partikel, was beispielsweise zu veränderten chemischen oder physikalischen Eigenschaften des gesinterten Bauteiles führt.

Die Barriereeigeschaften der Barriereschicht gegenüber Metallionen bewirkt eine Verringerung des Ionenübertritts von den Partikeln in den umgebenden Binder, was eine Verfärbung der Materialzusammensetzung (zum Beispiel eine Grünfärbung im Falle von Kupfer) und eine Beeinflussung der Reaktivität der Materialzusammensetzung verhindert.

Die Barriereeigeschaften der Barriereschicht gegenüber chemischen Reaktionen zwischen den Partikeln und dem Binder verringert allfällige Polymerisationsreaktion durch chemische Reaktion (z.B. kationische Polymerisation) an der Oberfläche, insbesondere Metalloberfläche. Dies wiederum bewirkt auf Grund der Verhinderung der Überpolymerisation eine Verbesserung der Detailgenauigkeit bzw. der Auflösung des Bauteils.

Ein weiterer Effekt der Beschichtung der Partikel liegt in der Erhöhung der Fließfähigkeit der Partikel, da die Barriereschicht zu einer Abrundung der Partikeloberfläche führt.

Schließlich erleichtert die Barriereschicht die Entwicklung von neuen Varianten der Materialzusammensetzung. Die aufgetragene Barriereschicht gewährleistet hierbei eine gleichbleibende Wechselwirkung zwischen dem Binder und den Partikeln, die unabhängig vom gewählten Partikelmaterial ist, was eine Reduktion der Entwicklungszeit nach sich zieht.

Eine bevorzugte Ausführung der Erfindung sieht vor, dass die Barriereschicht ein Metalloxid oder Metallphosphat umfasst oder daraus besteht. Beispiele geeigneter Verbindungen umfassen AlOₓ, CoOₓ ZrOₓ, SiOₓ, TiOₓ, SnOₓ, LiOₓ, ZnOₓ, NbOₓ, HfOₓ, MgOₓ, NiOₓ, SrOₓ, BOₓ, BaOₓ, WOₓ, BiOₓ, CeOₓ, LuOₓ, DyOₓ, ErOₓ, YOₓ, LaOₓ, TiNbₓO_{y}, LiNbₓO_{y}, LiZrₓO_{y}, LiAlOₓ, LiWOₓ, LiAlOₓ, LiYOₓ, MgAlₓO_{y}, CeZrₓO_{y}, AlPₓO_{y}, LiPₓO_{y}, LiPₓO_{y}N_{z}, TiPₓO_{y} und Sn(PO₄)ₓ.

Bevorzugt ist das Metalloxid ausgewählt aus der Gruppe bestehend aus Siliziumoxid, Aluminiumoxid, Boroxid, Zirkoniumoxid, Ceroxid, Eisenoxid, Titanoxid, Chromoxid, Zinnoxid, Molybdänoxid, deren Oxidhydraten, deren Hydroxiden und Mischungen davon.

Besonders bevorzugt besteht die Barriereschicht im Wesentlichen aus Aluminiumoxid, Siliziumoxid oder Titanoxid, wobei Siliziumoxid bevorzugt ist. Im Rahmen der vorliegenden Erfindung ist der Begriff "im Wesentlichen bestehend aus" dahingehend zu verstehen, dass die jeweilige Schicht aus mindestens 90 Gew.-%, insbesondere wenigstens 95 Gew.-%, aus dem angegebenen Material besteht.

Eine andere bevorzugte Ausführung der Erfindung sieht vor, dass die Barriereschicht einen Kunststoff umfasst, daraus besteht oder im Wesentlichen daraus besteht. Der Kunststoff kann hierbei aus der Gruppe bestehend aus Polycarbonaten, Polyvinylchlorid, Polyethylenterephthalat, Polyacrylat, Polymethacrylat, Polyether, Polyester, Polyamin, Polyamid, Polyol, Polyurethan, Polyphenolformaldehyd, Polyolefin und Mischungen davon ausgewählt sein. Weitere organische Verbindungen, die sich an die Metalloxidschicht oder an die Oberfläche der Metallpartikel anbinden, sind Silane, Säureanhydride und phosphororganische Verbindungen sowie Titanate und Borate. Die organischen Verbindungen können Bindungen mit der Metalloxidschicht der Partikel eingehen. Diese organischen Verbindungen sind vorzugsweise über die Silangruppe, die Phosphonatgruppe oder eine der Säuregruppen kovalent an die Oxidschicht der Partikel (bzw. bei fehlender Oxidschicht an die Partikeloberfläche) gebunden. Beinhalten die organischen Beschichtungen mindestens eine Kohlenstoff-Kohlenstoff-Mehrfachbindungsfunktion, ist es möglich die organische Beschichtung mit den reaktiven Komponenten des Binders zu vernetzen.

Für eine ausreichende Barrierewirkung der Barriereschicht ist es vorteilhaft, wenn die Barriereschicht eine mittlere Dicke von 1-300 nm aufweist.

Die Beschichtung der Partikel mit der Barriereschicht kann mit herkömmlichen Beschichtungsverfahren, vor allem aus der Dünnschichttechnik bekannt, vorgenommen werden. Beispielsweise kann die Beschichtung durch physikalische (PVD, z.B. thermisches Verdampfen oder Sputtern) und chemische Gasphasenabscheidung (CVD) erfolgen.

Die Metallpartikel liegen vorzugsweise als Metallpulver mit einer Teilchengröße von 2 - 40µm vor. Die Keramikpartikel liegen vorzugsweise als Keramikpulver mit einer Teilchengröße von 50 - 3000nm vor.

Wie bereits erwähnt umfasst die Materialzusammensetzung, aus welcher das Grünteil additiv aufgebaut wird, zusätzlich zu den beschichteten Partikeln einen organischen Binder. Der Binder hat die Aufgabe, die Partikel in der Materialzusammensetzung zusammenzuhalten, sodass die Materialzusammensetzung eine homogene Masse ausbildet, innerhalb der die Partikel verteilt sind. Als Binder wird hierbei bevorzugt ein chemisch oder physikalisch (z.B. thermisch) zumindest teilweise verfestigbares Material eingesetzt, das für die Aufbringung fließfähig oder plastisch verformbar ist und nach der Ausbildung einer Grünteilschicht oder des Grünteils im zumindest teilweise verfestigtem Zustand vorliegt. Geeignete Materialien für den Binder umfassen Elastomere, Duromere, Thermoplaste, Wachse sowie photochemisch aushärtbare Polymere, oder Mischungen davon. Im letzteren Fall sieht eine bevorzugte Ausbildung der Erfindung vor, dass der Binder einen Photoinitiator zur photochemischen Härtung des Binders enthält. Dies ermöglicht die Verwendung der Materialzusammensetzung in einem stereolithographischen additiven Fertigungsverfahren.

Die Materialzusammensetzung kann neben den Partikeln und dem Binder folgende Bestandteile enthalten:
Mögliche Materialklassen für das Aufbaumaterial sind Polymere, Präpolymere oder Monomere mit einer oder mehreren funktionellen Gruppen, wie Epoxide (Glycidylether), Acrylate, Methacrylate, Vinylether, Allylether, Thiole, Norbornene, Proteine sowie andere insbesondere biologische Stoffe, die bei Bestrahlung mit UV-Licht direkt und/oder in Kombination mit einem Photo-Initiator chemisch vernetzen oder polymerisieren.

Als UV-härtbare Binderkomponenten können u.a. herkömmliche, einem Fachmann bekannte vorwiegend radikalisch polymerisierbare Photopolymere verwendet werden. Diese Bestandteile können bei Bestrahlung mit UV-Licht direkt und/oder in Kombination mit einem Photo-Initiator chemisch vernetzen oder polymerisieren. Beispiele für radikalisch polymerisierbare Komponenten sind insbesondere acrylat- oder methacrylatfunktionelle Polymere, Präpolymere oder Oligomere, wie Polyester(meth)acrylate, Polyether(meth)acrylate, Amino(meth)acrylate, (Meth)acrylat-Copolymere, Polyurethan(meth)acrylate, Epoxidharz(meth)acrylate. Bei mit Metall- und Keramikpartikeln gefüllten Materialien ist eine höhere chemische Reaktivität der Polymerisationsreaktion wünschenswert, daher werden vorwiegend funktionalisierte Epoxy- oder Urethan(meth)acrylate verwendet. Der Binder kann noch zusätzliche Komponenten wie Absorber, Inhibitoren, Initiatoren, Reaktivverdünner, Weichmacher, Lösungsmittel und andere flüssige oder feste Additive wie zum Beispiel Nanopartikel enthalten. Der gesamte Binder wird in üblichen, dem Fachmann bekannten Mengen im Druckmaterial eingesetzt, insbesondere in Mengen von bis zu 50 Gew.-% der Beschichtungsmasse, vorzugsweise bis zu 5 Gew.-%.

Die Wahl des geeigneten Binders hängt von dem additiven Fertigungsverfahren ab, mit dem das Grünteil aufgebaut werden soll. Bevorzugte Beispiele für additive Fertigungsverfahren, die im Rahmen der Erfindung zum Einsatz gelangen können, umfassen die Stereolithographie, Nanopartikel Jetting, Fused Deposition Modeling (FDM) oder Fused Filament Fabrication (FFF), Metal Pellet FDM, Mold Slurry Deposition und Metal Selective Laser Sintering, Binder Jetting und Powder Metallurgy Jetting.

Im Zusammenhang mit stereolithographischen Verfahren sieht eine bevorzugte Ausbildung vor, dass für jede Grünteilschicht folgende Schritte ausgeführt werden:
- Auftragen einer Schicht der Materialzusammensetzung, um eine Materialschicht zu bilden,
- ortsselektives Polymerisieren der Materialschicht, um eine ortsselektiv polymerisierte Grünteilschicht zu erhalten.

Gemäß einem zweiten Aspekt betrifft die Erfindung eine Materialzusammensetzung zur additiven, sinterbasierten Fertigung von metallischen und/oder keramischen Bauteilen, insbesondere zur Durchführung eines Verfahrens nach dem ersten Aspekt der Erfindung, umfassend einen organischen Binder und Partikel aus Metall und/oder Keramik, wobei die Partikel mit wenigstens einer sie umhüllenden Barriereschicht versehen sind.

Bevorzugte Ausbildungen der Materialzusammensetzung betreffen das Material der Barriereschicht und die Art des Binders und es wird hierzu auf die oben angegebenen Ausführungen zum erfindungsgemäßen Verfahren verwiesen.

Die Erfindung wird nachfolgend anhand der folgenden Ausführungsbeispiele näher erläutert.

Der Binder besteht aus einem Photopolymer, als beispielhafte Photoharzformulierung (hier auf Acrylatbasis) sei eine Kombination aus Poly(ethylenglycol)methyletheracrylat (z.B. 40 Massen-%, CAS 32171-39-4), Diurethan-Dimethacrylat (10%, 72869-86-4), Photoinitiator Diphenyl(2,4,6-trimethylbenzoyl)phosphin oxid (z.B. 1 Massen-%), einem Paraffin (35 Massen-%CAS 8002-74-2), einem Absorber Sudan II (CAS 3118-97-6) und diversen, einem Fachmann bekannten Additiven, beispielsweise Dispergatoren und Emulgatoren.

Das verwendete Pulver ist eine verschlossen gelagerte Titan64 Legierung (ASTM B348) mit einer Spezifikation -32pm. Der mittlere Korndurchmesser beträgt ca. 20µm. Über das einem Fachmann bekannt Verfahren der Atomlagenabscheidung wird eine 3nm dicke Schicht aus SiO₂ auf dem Pulveroberfläche aufgetragen. Der Binder und das Pulver aus beschichteten Partikeln wird in einem Mischsystem im Verhältnis 50/50 bezogen auf das Volumen vermengt. Das so entstandene Druckmaterial bzw. der Feedstock wird gelagert und die chemische Stabilität über die Veränderung der Viskosität überprüft. Feedstock mit unbehandelten Partikeln reagiert chemisch über den Zeitraum einer Woche und liegt danach in einem gelartig-festen Zustand vor. Der Feedstock mit beschichteten Partikeln zeigt keinerlei Reaktion und die Viskosität des Feedstocks bleibt unverändert. Diese passivierende Wirkung erfolgt durch die physikalische Trennung des Binders von der Partikeloberfläche auf Grund der Beschichtung.

Um die positive Wirkung der Barriereschicht während des thermischen Entbinderns und Sinterns zu testen, wurde das beschichtete Pulver mittels einer thermogravimetrischen Analyse (TGA) untersucht. Während unbehandeltes Pulver bei 1h bei 400°C eine Zunahme des Gewichtes von 0,25% zeigte (vermutlich hervorgerufen durch Oxidation des Pulvers), konnte bei dem beschichteten Pulver keine Gewichtszunahme beobachtet werden. Somit kann eine Interaktion von Sauerstoff in diesem Temperaturbereich ausgeschlossen werden.

## Patentansprüche

1. Verfahren zur additiven Fertigung wenigstens eines metallischen und/oder keramischen Bauteils, umfassend:
a) additives Aufbauen wenigstens eines Grünteils in einer additiven Druckvorrichtung aus einer Materialzusammensetzung, die Partikel aus Metall und/oder Keramik und einen organischen Binder umfasst,
b) Entbindern des wenigstens einen Grünteils, und
c) Sintern des wenigstens einen Grünteils, um das Bauteil zu erhalten,
**dadurch gekennzeichnet, dass** die Partikel mit wenigstens einer sie umhüllenden Barriereschicht versehen sind.

2. Verfahren nach Anspruch 1, **dadurch gekennzeichnet, dass** die wenigstens eine Barriereschicht ein Metalloxid und/oder einen Kunststoff umfasst oder daraus besteht.

3. Verfahren nach Anspruch 2, **dadurch gekennzeichnet, dass** das Metalloxid ausgewählt ist aus der Gruppe bestehend aus Siliziumoxid, Aluminiumoxid, Boroxid, Zirkoniumoxid, Ceroxid, Eisenoxid, Titanoxid, Chromoxid, Zinnoxid, Molybdänoxid, deren Oxidhydraten, deren Hydroxiden und Mischungen davon.

4. Verfahren nach Anspruch 2, **dadurch gekennzeichnet, dass** der Kunststoff ausgewählt ist aus der Gruppe bestehend aus Polyamiden, Polycarbonaten, Polyvinylchlorid, Polyethylenterephthalat und Mischungen davon.

5. Verfahren nach einem der Ansprüche 1 bis 4, **dadurch gekennzeichnet, dass** die Barriereschicht eine mittlere Dicke von 1-300 nm aufweist.

6. Verfahren nach einem der Ansprüche 1 bis 5, **dadurch gekennzeichnet, dass** als Binder ein chemisch oder physikalisch zumindest teilweise verfestigbares Material eingesetzt wird.

7. Verfahren nach Anspruch 6, **dadurch gekennzeichnet. dass** der Binder einen Photoinitiator zur photochemischen Härtung des Binders enthält.

8. Verfahren nach Anspruch 6, **dadurch gekennzeichnet, dass** als Binder ein Thermoplast, Duromer, Elastomer oder eine Mischung davon eingesetzt wird.

9. Verfahren nach einem der Ansprüche 1 bis 7, **dadurch gekennzeichnet dass** das Grünteil schichtweise aufgebaut wird, wobei für jede Grünteilschicht folgende Schritte ausgeführt werden:
- Auftragen einer Schicht der Materialzusammensetzung, um eine Materialschicht zu bilden,
- ortsselektives Polymerisieren der Materialschicht, um eine ortsselektiv polymerisierte Grünteilschicht zu erhalten.

10. Materialzusammensetzung zur additiven, sinterbasierten Fertigung von metallischen und/oder keramischen Bauteilen, insbesondere zur Durchführung eines Verfahrens nach einem der Ansprüche 1 bis 9, umfassend einen organischen Binder und Partikel aus Metall und/oder Keramik, **dadurch gekennzeichnet, dass** die Partikel mit wenigstens einer sie umhüllenden Barriereschicht versehen sind.

11. Materialzusammensetzung nach Anspruch 10, **dadurch gekennzeichnet, dass** die wenigstens eine Barriereschicht aus einem Metalloxid oder einem Kunststoff besteht.

12. Materialzusammensetzung nach Anspruch 11, **dadurch gekennzeichnet, dass** das Metalloxid ausgewählt ist aus der Gruppe bestehend aus Siliziumoxid, Aluminiumoxid, Boroxid, Zirkoniumoxid, Ceroxid, Eisenoxid, Titanoxid, Chromoxid, Zinnoxid, Molybdänoxid, deren Oxidhydraten, deren Hydroxiden und Mischungen davon.

13. Materialzusammensetzung nach Anspruch 11, **dadurch gekennzeichnet, dass** der Kunststoff ausgewählt ist aus der Gruppe bestehend aus Polyamiden, Polycarbonaten, Polyvinylchlorid, Polyethylenterephthalat und Mischungen davon.

14. Materialzusammensetzung nach einem der Ansprüche 10 bis 13, **dadurch gekennzeichnet, dass** die Barriereschicht eine mittlere Dicke von 1-300 nm aufweist.

15. Materialzusammensetzung nach einem der Ansprüche 10 bis 14, **dadurch gekennzeichnet, dass** der Binder ein chemisch oder physikalisch zumindest teilweise verfestigbares Material ist.

16. Materialzusammensetzung Anspruch 15, **dadurch gekennzeichnet, dass** der Binder ein Thermoplast, Duromer, Elastomer, oder eine Mischung davon ist.

17. Materialzusammensetzung Anspruch 15, **dadurch gekennzeichnet, dass** der Binder einen Photoinitiator zur photochemischen Härtung des Binders enthält.
